# EUROPEAN PATENT APPLICATION

(11) **EP 3 537 212 A1**
(43) Date of publication of application: **11.09.2019**
(21) Application number: 19160511.2
(22) Date of filing: 04.03.2019
(51) Int. Cl.: G03B 1/00, G07G 1/00, G06K 7/10

(54) **IMAGING DEVICE AND OBJECT IMAGING APPARATUS**

(30) Priority: 05.03.2018 JP 2018038311
(71) Applicant: Toshiba Tec Kabushiki Kaisha, 141-8562 Tokyo (JP)
(72) Inventor: Harada, Shintaro, Tokyo 141-8562 (JP)
(74) Representative: Hoffmann Eitle

(57) **Abstract**

An imaging device includes a housing with a window on a front surface. A first irradiating section is in the housing at a first distance from the window to illuminate objects in a first region outside the housing with light directed through the window. A second irradiating section is in the housing at a second distance from the window to illuminate objects in a second region outside the housing with light directed through the window. The second region is closer to the housing than the first region. An imaging sensor is in the housing and configured to image objects illuminated by at least one of the first and second irradiating sections second irradiating section. The imaging sensor is closer to a back surface of the housing than the front surface.

## Description

### CROSS-REFERENCE TO RELATED APPLICATION

This application is based upon and claims the benefit of priority from Japanese Patent Application No. 2018-038311, filed in March 5, 2018, the entire contents of which are incorporated herein by reference.

### FIELD

An embodiment described herein relates generally to an imaging device and an object imaging apparatus.

### BACKGROUND

An imaging device that irradiates an object with light and images the object is known. Such an imaging device is used as a device that images a item sold in a store to recognize the item for purposes of sales transaction registration, for example.

These imaging devices typically include an irradiating section including, for example, an LED (light emitting diode) configured to irradiate an object, an imaging section configured to image the object using the light reflected from the object, and a reading window of transparent glass or the like permitting light emitted by the irradiating section to reach the object and light reflected from the object to reach the imaging device. The irradiating section usually includes a far-irradiating section for irradiating an object located at a relatively distant position from the imaging device and a near-irradiating section for irradiating an object located relatively near the imaging device. The far-irradiating section is typically provided near the reading window in order to better irradiate the distant object. The near-irradiating section is typically provided in back of the imaging device away from the reading window in order to better irradiate the near object. The near-irradiating section is often provided on a substrate on which the imaging section is also provided.

However, if the near-irradiating section and the imaging section are provided on the same substrate, an image sensor of the imaging section, may be affected by heat generated by the near-irradiating section in the emission of light. If heated too much, the imaging section sometimes cannot correctly image the object.

### SUMMARY OF THE INVENTION

One of the objects of the present invention is to improve prior art techniques and overcome at least some of the prior art problems as for instance above illustrated.

According to a first aspect of the invention, it is provided an imaging device, comprising a housing including a window on a front surface; a first irradiating section in the housing at a first distance from the window and configured to illuminate objects in a first region outside the housing with light directed through the window; a second irradiating section in the housing at a second distance from the window and configured to illuminate objects in a second region outside the housing with light directed through the window, the second region being closer to the housing than the first region; and an imaging sensor in the housing and configured to image objects illuminated by at least one of the first and second irradiating sections second irradiating section, the imaging sensor being closer to a back surface of the housing than the front surface.

Optionally, in the imaging device according to the first aspect of the invention, the first irradiating section comprises a first bank of lights proximate to a first side surface of the housing and a second bank of lights proximate a second side surface opposite the first side surface, and the second irradiation section is at position between the first bank and the second bank of the first irradiating section.

Optionally, in the imaging device according to the first aspect of the invention, the first irradiating section comprises a plurality of light-emitting diodes arranged in a line paralleling an upper surface of the housing.

Optionally, in the imaging device according to the first aspect of the invention, the first irradiating section comprises a plurality of light-emitting diodes.

Optionally, in the imaging device according to the first aspect of the invention, the second irradiating section comprises three light-emitting diodes respectively arranged at corners of a triangle.

Optionally, in the imaging device according to the first aspect of the invention, the light from the second irradiating section directed through the window at an angle that is more oblique with respect to the window than the light from the first irradiating section, and the second distance is greater than the first distance.

Optionally, in the imaging device according to the first aspect of the invention, the first irradiating section and the second irradiating section are disposed proximate to an upper edge of the window.

Optionally, in the imaging device according to the first aspect of the invention, the imaging sensor is a charge-coupled device array.

According to a second aspect of the invention, it is provided an object imaging apparatus, comprising a vertical scanner housing extending vertically from a checkout counter; and an imaging device in the vertical scanner housing at height greater than a height of an upper surface of the checkout counter and including: a housing including a window on a front surface; a first irradiating section in the housing at a first distance from the window and configured to illuminate objects in a first region outside the housing with light directed through the window; a second irradiating section in the housing at a second distance from the window and configured to illuminate objects in a second region outside the housing with light directed through the window, the second region being closer to the housing than the first region; and an imaging sensor in the housing and configured to image objects illuminated by at least one of the first and second irradiating sections second irradiating section, the imaging sensor being closer to a back surface of the housing than the front surface.

Optionally, in the object imaging apparatus according to the second aspect of the invention, the first irradiating section comprises a first bank of lights proximate to a first side surface of the housing and a second bank of lights proximate a second side surface opposite the first side surface, and the second irradiation section is at position between the first bank and the second bank of the first irradiating section.

Optionally, in the object imaging apparatus according to the second aspect of the invention, the first irradiating section comprises a plurality of light-emitting diodes arranged in a line paralleling an upper surface of the housing.

Optionally, in the object imaging apparatus according to the second aspect of the invention, the first irradiating section comprises a plurality of light-emitting diodes.

Optionally, in the object imaging apparatus according to the second aspect of the invention, the second irradiating section comprises three light-emitting diodes respectively arranged at the corners of a triangle.

Optionally, in the object imaging apparatus according to the second aspect of the invention, the light from the second irradiating section directed through the window at an angle that is more oblique with respect to the window than the light from the first irradiating section, and the second distance is greater than the first distance.

Optionally, in the object imaging apparatus according to the second aspect of the invention, the first irradiating section and the second irradiating section are disposed proximate to an upper edge of the window.

Optionally, in the object imaging apparatus according to the second aspect of the invention, the imaging sensor is a charge-coupled device array.

According to a third aspect of the invention, it is provided a checkout apparatus, comprising a checkout counter; a vertical scanner housing extending vertically from the checkout counter; and an imaging device in the vertical scanner housing at height greater than a height of an upper surface of the checkout counter and including: a housing including a window on a front surface; a first irradiating section in the housing at a first distance from the window and configured to illuminate objects in a first region outside the housing with light directed through the window; a second irradiating section in the housing at a second distance from the window and configured to illuminate objects in a second region outside the housing with light directed through the window, the second region being closer to the housing than the first region; and an imaging sensor in the housing and configured to image objects illuminated by at least one of the first and second irradiating sections second irradiating section, the imaging sensor being closer to a back surface of the housing than the front surface.

Optionally, in the checkout apparatus according to the third aspect of the invention, the imaging device is a bar code scanner.

Optionally, in the checkout apparatus according to the third aspect of the invention, the imaging sensor is attached to the back surface of the housing.

### DESCRIPTION OF THE DRAWINGS

FIG. 1 is a diagram illustrating the exterior of a point-of-sale (POS) terminal including an imaging device.
FIG. 2 is a front view of an imaging device.
FIG. 3 is a side cross-sectional view of an imaging device.

### DETAILED DESCRIPTION

In general, according to one embodiment, an imaging device comprises a housing including a window on a front surface; a first irradiating section in the housing at a first distance from the window and configured to illuminate objects in a first region outside the housing with light directed through the window; and a second irradiating section in the housing at a second distance from the window and configured to illuminate objects in a second region outside the housing with light directed through the window. The second region is closer to the housing than the first region. An imaging sensor is in the housing. The imaging sensor is configured to image objects illuminated by at least one of the first and second irradiating sections second irradiating section. The imaging sensor is closer to a back surface of the housing than the front surface.

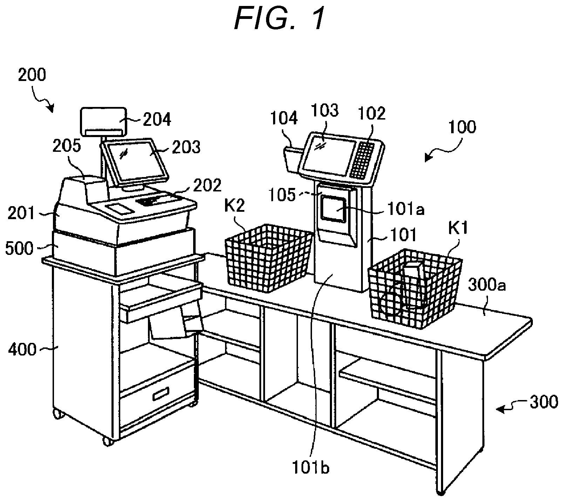

An imaging device and an object imaging apparatus according to an embodiment are explained below with reference to FIGS. 1 to 3. This embodiment is an example in which the object imaging apparatus is applied to a commodity recognizing apparatus such as a POS terminal provided in a retail store such as a supermarket. In this embodiment, a commodity (e.g., an item for sale in a store) is explained as an example of an object imaged by an imaging device. The present disclosure is not limited by the example explained below.

FIG. 1 is an exterior view of a store checkout system including a commodity recognizing apparatus according to an embodiment. The store checkout system includes a commodity recognizing apparatus 100, which is an object imaging apparatus, and a POS terminal 200. The commodity recognizing apparatus 100 is disposed on and attached to a counter 300. The counter 300 includes a planar top plate 300a on the upper surface of the counter 300. A basket 301 for storing commodities can be placed on the top plate 300a.

The counter 300 separates a customer aisle (on the far side of the counter 300 in FIG. 1) from an operator space (on the near side of the counter 300 in FIG. 1). A housing 101 is provided substantially in the center of the counter 300 on a customer side edge of the top plate 300a.

The housing 101 forms a flat box shape including an vertical surface 101b perpendicular to the top plate 300a. The housing 101 includes an imaging device 105 positioned above the counter 300. The housing 101 includes a keypad 102, a touch panel 103 (including an operator display), and a customer display 104 above the imaging device 105. The operator display displays information to an operator, such as a store clerk. The customer display 104 displays information to a customer. The touch panel 103 may function as a keyboard and a user interface more generally.

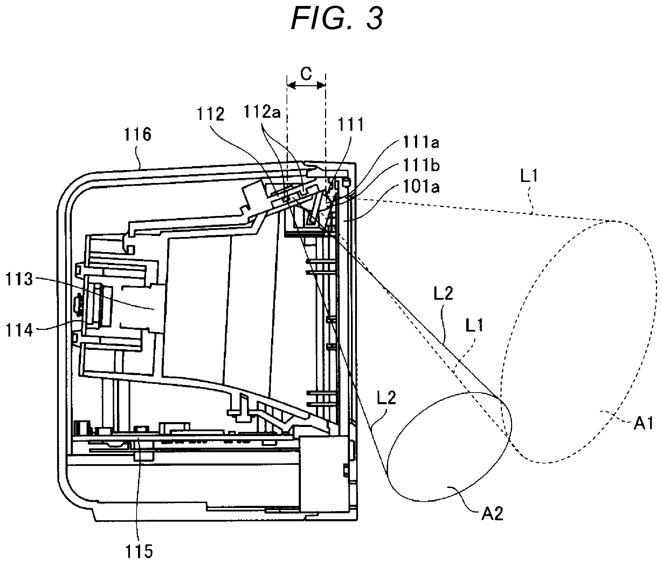

The imaging device 105 is provided on the inside of the housing 101. The imaging device 105 includes a planar reading window 101a. The reading window 101a is provided substantially in parallel to the vertical surface 101b. The imaging device 105 images, via the reading window 101a, objects located in a region A1 or a region A2 (see FIG. 3) in front of the reading window 101a.

The commodity recognizing apparatus 100 performs generic object recognition on the commodity and specifies the commodity on the basis of image information obtained by the imaging device 105. The POS terminal 200 may register the commodity using the generic object recognition.

The housing 101 directs the keypad 102, the touch panel 103, and the reading window 101a towards the operator side and directs the customer display 104 towards the customer side. The upper surface of the top plate 300a is divided into an upstream side region and a downstream side region relative to the position of the commodity recognizing apparatus 100. The region on the upstream side is used as a space for placing customer-selected items for which sales registration has not yet been completed or a basket K1 storing customer-selected items for which sales registration has not yet been completed. The region on the downstream side is used as a space for placing items for which the sales registration has been completed or a basket K2 for storing the registered items.

The POS terminal 200 on a drawer 500 on a register stand 400. The POS terminal 200 performs sales registration processing and accounting/settlement processing for items sold in the store. Here, sales registration processing means the process of displaying and storing commodity information such as commodity names and prices on the basis of input commodity codes, and accounting/settlement processing means for the process of displaying a total amount due from the customer for a particular sales transaction on the basis of the registered commodity information from the sales registration processing and then recognizing money/payment from a customer, calculating change due to the customer, and issuing a receipt. Sales transaction processing thus overall includes sales registration processing and accounting/settlement processing. Transaction information provided on an issued receipt includes commodity information and accounting information.

The POS terminal 200 includes a keyboard 202, an operator display 203, a customer display 204, and a printer 205. The operator display 203 displays information to the operator. The customer display 204 displays information to the customer. The printer 205 issues a receipt on which transaction information is printed.

The drawer 500 stores money received from the customer. The drawer 500 stores change to be used in transaction settlements. An automatic change machine that automatically pays out change (coins or bills) is sometimes used instead of drawer 500.

The register stand 400 is a table, stand, or the like on which the POS terminal 200 and the drawer 500 are placed. The register stand 400 is located on the operator space side adjacent to the end portion of the counter 300 on the downstream side.

The commodity recognizing apparatus 100 and the POS terminal 200 are connected by a communication cable. Therefore, the commodity recognizing apparatus 100 transmits a commodity code to the POS terminal 200 indicating a commodity recognized by the commodity recognizing apparatus 100 using generic object recognition techniques or otherwise.

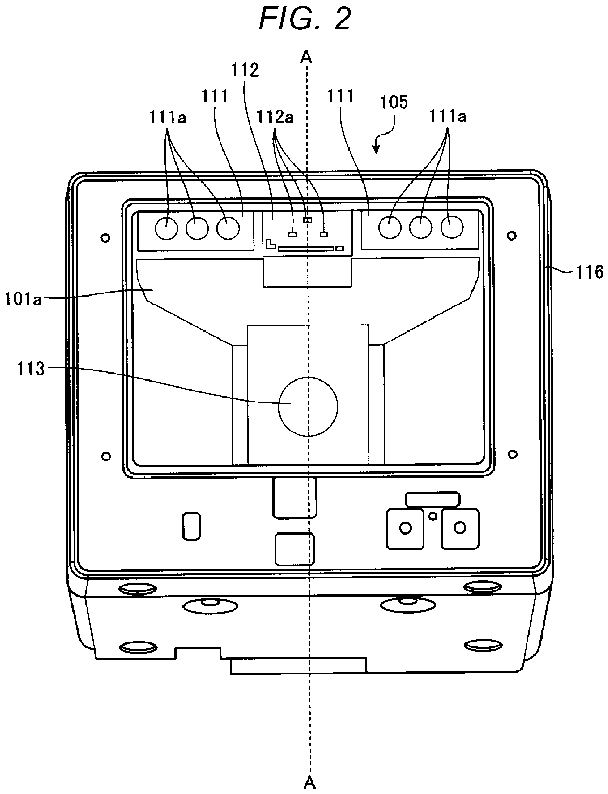

The imaging device 105 is in the housing 101 at a position above the counter 300 at a predetermined distance. FIG. 2 is a front view of the imaging device 105. As illustrated in FIG. 2, the imaging device 105 includes a substantially rectangular parallelepiped housing 116. The imaging device 105 includes a reading window 101a on one surface of the housing 116. The reading window 101a is, for example, transparent glass or plastic. When the imaging device 105 is installed in the housing 101, the reading window 101a is generally parallel to the vertical surface 101b of the housing 101. The reading window 101a is desirably flush with the vertical surface 101b of the housing 101.

The imaging device 105 includes inside the housing 116, first irradiating sections 111, which are far-irradiating sections, and a second irradiating section 112, which is a near-irradiating section. The first irradiating sections 111 and the second irradiating section 112 are provided proximate to the reading window 101a. The first irradiating sections 111 are disposed nearer the corner portions of the housing 116 in two different groupings. That is, first irradiating sections 111 are provided on an upper left side portion and an upper right side portion of the reading window 101a. The left and right first irradiating sections 111 may be referred to in some context as a left bank of lights 111 and a right bank of lights 111, respectively. A first irradiating section 111 is not provided near the center portion of the reading window 101a. Three LEDs 111a are disposed side by side in the lateral direction (the left-right direction in FIG. 2) in each of the first irradiating sections 111.

The second irradiating section 112 is provided on the upper center portion of the reading window 101a between the first irradiating sections 111. Since the first irradiating sections 111 are used to irradiate the region A1 (see FIG. 3) relatively far from the imaging device 105, two first irradiating sections 111 are set such that light emitted from these sections reach a distant place. In the second irradiating section 112, three LEDs are disposed at the corners of a triangle shape. The second irradiating section 112 irradiates the region A2 closer to the imaging device 105 than the region A1. All of the LEDs used in the first irradiating sections 111 and the LEDs used in the second irradiating section 112 are substantially the same.

The imaging device 105 includes an imaging section 113 on the inside of the housing 116. The imaging section 113 is an imaging device including a CCD (charge coupled device) or a CMOS (complementary metal-oxide semiconductor).

FIG. 3 is a side cross-sectional view of the imaging device illustrated in FIG. 2 as viewed from left side and cut along the A-A line. As illustrated in FIG. 3, the reading window 101a is provided on the front surface section of the housing 116. The first irradiating sections 111 and the second irradiating section 112 are provided near the reading window 101a of the housing 116. Convex lenses 111b are formed at the distal end portions of the LEDs 111a of the first irradiating sections 111. The convex lenses 111b serve to focus light emitted by the LEDs 111a. Since the convex lenses 111b focus the light emitted from the LEDs 111a to a certain degree, the light emitted by the first irradiating sections 111 can reach a reach a relatively distant place as a relatively intense light.

The first irradiating sections 111 are directed towards the reading window 101a. The first irradiating sections 111 are radiated toward a direction (the right side in FIG. 3) approaching orthogonal to the reading window 101a. A range indicated by a dotted line L1 corresponds to the light emitted from the first radiating sections 101 which illuminates the region A1. The region A1 is at a predetermined distance from the imaging device and is above the counter 300. The first irradiating sections 111 irradiate a commodity passing through the region A1.

The second irradiating section 112 are directed more downwardly than the first irradiating sections 111. The light radiated from the second irradiating section 112 is radiated in a range indicated by a dotted line L2 and illuminates the region A2. The region A2 is closer to the imaging device 105 than the region A1 but is also a region above the counter 300. The second irradiating section 112 irradiates a commodity passing the region A2. The region A1 and the region A2 may partially overlap as depicted in FIG. 3. Therefore, an object in the overlapping region is irradiated by both the first irradiating sections 111 and the second irradiating section 112.

The second irradiating section 112 is located further away from the reading window 101a than the first irradiating sections 111 by a fixed distance C The second irradiating section 112 located away from the reading window 101a by the fixed distance C is still considered located near the reading window 101a and is also considered located in a position near the irradiating sections 111. The second irradiating section 112 is located away from the reading window 101a by the distance C beyond the first irradiating sections 111. Thus, the light from the second irradiating section can be radiated toward the region A2 close to the imaging device 105 without being pointed excessively downward and thus significantly attenuated by the reading window 101a.

The imaging device 105 includes the imaging section 113. The imaging section 113 is attached on the substrate 114 in a position (in the left side in FIG. 3) at the back of the housing 116 well away from the reading window 101a. The imaging section 113 is mounted substantially centered in relation to the reading window 101a; however, the imaging section 113 is sufficiently far away from the first irradiating sections 111 and the second irradiating section 112 to prevent the imaging section 113 from being significantly affected by heat generated by the first irradiating sections 111 and the second irradiating section 112.

Near the bottom portion of the imaging device 105, a control section 115 for controlling the first irradiating sections 111, the second irradiating section 112, the imaging section 113, and the like is provided. The control section 115 identifies an imaged commodity on the basis of an image data from the imaging section 113. The control section 115 may also adjust the volume of sounds emitted by the imaging device 105 and a reading depth of the imaging device 105. The control section 115 can also determine whether a person is presently in front of the imaging device 105 using various sensor outputs.

In a sales registration process utilizing the commodity recognition apparatus 100, the imaging device 105 images a commodity taken out from the basket K1 and passed the front of the imaging device 105. Specifically, the first irradiating sections 111 irradiate any commodity passing the region A1. The second irradiating section 112 irradiates any commodity passing the region A2. The imaging section 113 images the commodities irradiated by the first irradiating sections 111 and/or the second irradiating section 112.

As explained above, according to the embodiment, the imaging device 105 includes the first irradiating sections 111 provided near the reading window 101a in the housing 116 and configured to irradiate lights on the region A1 away from the housing 116, the second irradiating section 112 provided near the reading window 101a in the housing 116 and configured to irradiate light on the region A2 closer to the housing 116 than the lights from the first irradiating sections 111. However, the imaging section 113 well away from the reading window 101a in the depth direction of the housing 116. Therefore, the imaging section 113 in the imaging device 105 is not significantly affected by heat generation by the first irradiating sections 111 and the second irradiating section 112.

The commodity recognizing apparatus 100 includes the housing 101 extending upward from the counter 300, on which the basket K1 storing commodities is placed. The housing 101 includes the vertical surface 101b and the imaging device 105 provided above the counter 300. The imaging device 105 includes the housing 116 including the reading window 101a parallel to the vertical surface 101b, the first irradiating sections 111 configured to irradiate the region A1 away from the housing 116, the second irradiating section 112 configured to irradiate light on the second region A2 closer to the housing 116, and the imaging section 113 provided in the housing 116 away from the reading window 101a and configured to image a commodity irradiated by at least one of the first irradiating sections 111 and the second irradiating section 112.

For example, , two first irradiating sections 111 and the one second irradiating section 112 are included in the example embodiment. However, the numbers of the first irradiating sections 111 and the second irradiating sections 112 are not limited to these numbers.

In an example embodiment, the first irradiating sections 111 are respectively provided on both the sides of the one second irradiating section 112. However, the positions of the first irradiating sections 111 and the second irradiating section 112 can be varied.

In an example embodiment, the first irradiating sections 111 radiate at an angle approaching orthogonal to the window plane. However, this is not necessarily required and the adopted irradiation angles for the first irradiating sections 111 can be set according to the desired position of the region A1. The second irradiating section 112 radiates light obliquely downward with respect to the window plane. However, this is not necessarily required and the adopted irradiation angle of the second irradiating section 112 can be set according to the desired position of the region A2.

In an example embodiment, the second irradiating section 112 is shifted towards the back of the housing 116 by the distance C from the first irradiating sections 111. However, in other examples, the second irradiating section 112 may be disposed at the same distance from the window plane as the first irradiating sections 111 (e.g., distance C = 0).

In an example embodiment, a commodity or product for sale in a retail store is presented as an example of an object to be imaged by the imaging device 105. However, the present disclosure is not limited to this example and the imaged object may other than a commodity or product for sale in a retail store.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions, and changes in the form of the embodiments described herein may be made without departing from the scope of the present invention. The accompanying claims and their equivalents are intended to cover such forms or modifications as would fall within the scope of the present invention as defined by the appended claims.

## Claims

1. An imaging device, comprising:
a housing including a window on a front surface;
a first irradiating section in the housing at a first distance from the window and configured to illuminate objects in a first region outside the housing with light directed through the window;
a second irradiating section in the housing at a second distance from the window and configured to illuminate objects in a second region outside the housing with light directed through the window, the second region being closer to the housing than the first region; and
an imaging sensor in the housing and configured to image objects illuminated by at least one of the first and second irradiating sections, the imaging sensor being closer to a back surface of the housing than the front surface.

2. The imaging device according to claim 1, wherein
the first irradiating section comprises a first bank of lights proximate to a first side surface of the housing and a second bank of lights proximate a second side surface opposite the first side surface, and
the second irradiation section is at a position between the first bank and the second bank of the first irradiating section.

3. The imaging device according to claim 1 or 2, wherein the first irradiating section comprises a plurality of light-emitting diodes arranged in a line paralleling an upper surface of the housing.

4. The imaging device according to any of claims 1 to 3, wherein the first irradiating section comprises a plurality of light-emitting diodes.

5. The imaging device according to any of claims 1 to 4, wherein the second irradiating section comprises three light-emitting diodes respectively arranged at corners of a triangle.

6. The imaging device according to any of claims 1 to 5, wherein
the light from the second irradiating section is directed through the window at an angle that is more oblique with respect to the window than the light from the first irradiating section, and
the second distance is greater than the first distance.

7. The imaging device according to any of claims 1 to 6, wherein
the first irradiating section and the second irradiating section are disposed proximate to an upper edge of the window.

8. The imaging device according to any of claims 1 to 7, wherein the imaging sensor is a charge-coupled device array.

9. An object imaging apparatus, comprising:
a vertical scanner housing extending vertically from a checkout counter; and
an imaging device in the vertical scanner housing at height greater than a height of an upper surface of the checkout counter and including:
a housing including a window on a front surface;
a first irradiating section in the housing at a first distance from the window and configured to illuminate objects in a first region outside the housing with light directed through the window;
a second irradiating section in the housing at a second distance from the window and configured to illuminate objects in a second region outside the housing with light directed through the window, the second region being closer to the housing than the first region; and
an imaging sensor in the housing and configured to image objects illuminated by at least one of the first and second irradiating sections, the imaging sensor being closer to a back surface of the housing than the front surface.

10. The object imaging apparatus according to claim 9, wherein
the first irradiating section comprises a first bank of lights proximate to a first side surface of the housing and a second bank of lights proximate a second side surface opposite the first side surface, and
the second irradiation section is at position between the first bank and the second bank of the first irradiating section.

11. The object imaging apparatus according to claim 9 or 10, wherein the first irradiating section comprises a plurality of light-emitting diodes arranged in a line paralleling an upper surface of the housing.

12. The object imaging apparatus according to any of claims 9 to 11, wherein the first irradiating section comprises a plurality of light-emitting diodes.

13. A checkout apparatus, comprising:
a checkout counter;
a vertical scanner housing extending vertically from the checkout counter; and
an imaging device in the vertical scanner housing at height greater than a height of an upper surface of the checkout counter and including:
a housing including a window on a front surface;
a first irradiating section in the housing at a first distance from the window and configured to illuminate objects in a first region outside the housing with light directed through the window;
a second irradiating section in the housing at a second distance from the window and configured to illuminate objects in a second region outside the housing with light directed through the window, the second region being closer to the housing than the first region; and
an imaging sensor in the housing and configured to image objects illuminated by at least one of the first and second irradiating sections, the imaging sensor being closer to a back surface of the housing than the front surface.

14. The checkout apparatus according to claim 13, wherein the imaging device is a bar code scanner.

15. The checkout apparatus according to claim 13 or 14, wherein the imaging sensor is attached to the back surface of the housing.
